# EUROPEAN PATENT APPLICATION

(11) **EP 4 599 961 A1**
(43) Date of publication of application: **13.08.2025**
(21) Application number: 25152231.4
(22) Date of filing: 16.01.2025
(51) Int. Cl.: B23B 31/08, B23C 3/12

(54) **TILTING MECHANISM**

(30) Priority: 06.02.2024 JP 2024016501
(71) Applicant: Sugino Machine Limited, Namerikawa City, Toyama 936-8577 (JP)
(72) Inventor: ISHITANI, Akihiro, Namerikawa City, Toyama, 9368577 (JP)
(74) Representative: Global IP Europe Patentanwaltskanzlei

(57) **Abstract**

A tilting mechanism (10) includes: a housing (11) including a body chamber (11c) extending along a reference axis (1), a receiving surface (11g1) located at a distal end portion of the body chamber (11c), and an abutment surface (11g2); a body (13) disposed inside the body chamber (11c) in a tiltable manner with respect to the reference axis (1), the body (13,) including a first spherical surface (13b1) coming in contact with the receiving surface (11g1), and a contact surface (13b2) coming in contact with the abutment surface (11g2), an elastic member (17) disposed in the body chamber (11c) to urge the body (13) toward a distal end; and an anti-rotation member (15) disposed in the housing (11) to prevent rotation of the body (13).

## Description

### BACKGROUND

### 1. Technical Field

The present invention relates to a tilting mechanism.

### 2. Description of the Background

A deburring tool attached to a robot or the like is known (for example, JP2020-66120 A; hereinafter, Patent Literature 1). The deburring tool of Patent Literature 1 includes a cylindrical housing, a spindle body having a center disk and being tiltable and loosely fitted and supported in the housing, a piston that presses the center disk toward the distal end, a spring that urges the piston toward the distal end, a separation ring that is provided between the piston and the spring, and a flow path that supplies air between the separation ring and the piston.

### BRIEF SUMMARY

In the deburring tool of Patent Literature 1, when the spindle body is tilted, a moment load acts on the piston, and the piston may be difficult to move. It is thus difficult to reduce the load required for the spindle body to tilt.

An object of the present invention is to provide a tilting mechanism capable of tilting a spindle body even when a moment load acting on the spindle body is relatively small.

A first aspect of the present invention provides a tilting mechanism, including:
a housing including
   a body chamber extending along a reference axis,
   a receiving surface located at a distal end portion of the body chamber, and
   an abutment surface,
a body disposed inside the body chamber in a tiltable manner with respect to the reference axis, the body including
   a first spherical surface configured to come in contact with the receiving surface, and
   a contact surface configured to come in contact with the abutment surface,
an elastic member disposed in the body chamber, the elastic member configured to urge the body toward a distal end; and
an anti-rotation member disposed in the housing to prevent rotation of the body.

The tilting mechanism is, for example, a deburring tool, a hand, or a chuck. The attachment is, for example, a spindle body, a hand, or a chuck. The attachment is disposed at a distal end of the body. The attachment may be actuated by a working fluid.

The tip tool is, for example, a cutter, a brush, or a polishing bar.

The housing may include a flange chamber. The flange may be disposed inside the flange chamber. The flange chamber may be located at a distal end of the housing. The flange chamber is connected to the body chamber. The contact surface may be located at a distal end of the flange. The receiving surface may be located at a distal end of the flange.

The housing may include a case and a cover. The cover is detachably attached at a distal end portion of the case. The cover may have a receiving surface, a flange chamber or an abutment surface. The anti-rotation pin may include a shaft portion, a head portion, and a fastening portion. The shaft portion abuts against the receiving portion. The anti-rotation pin may fasten the cover to the case.

The center of the first spherical surface is located substantially on the reference axis. Herein, "substantially" means within 0.5 mm from the reference axis, preferably within 0.2 mm. The center of the first spherical surface is located on the attachment axis. Preferably, the center of the first spherical surface is located at a central portion of the flange in the thickness direction.

The anti-rotation pin may extend parallel to the reference axis. The receiving portion may extend parallel to the reference axis. The flange may include one or more receiving portions. The anti-rotation pins may be inserted into each of the receiving portions. The plurality of the receiving portions may be evenly arranged in the circumferential direction. The receiving portion is a hole or a groove.

The anti-rotation pin may extend perpendicularly to the reference axis. A plurality of the anti-rotation pins may be arranged on a pin installation plane perpendicular to the reference axis. Preferably, the pin installation plane passes through the center of the first spherical surface. A plurality of anti-rotation pins may be evenly arranged in the circumferential direction. The receiving portion may extend perpendicular to the attachment axis. The receiving portion may extend parallel to the attachment axis. The receiving portion may pass through the flange in the direction of the attachment axis. The receiving portion, which is a receiving groove, may have an abutment surface. Preferably, the abutment surface of the receiving portion is a plane passing through the attachment axis.

The working fluid source is, for example, a compressor, an oil hydraulic unit, or a water hydraulic unit. The working fluid is, for example, compressed air, hydraulic oil, water, working coolant, preferably compressed air. The ejector is, for example, a tank of a silencer, a hydraulic unit or a hydraulic unit. The ejector ejects the working fluid.

According to the tilting mechanism of the present invention, the spindle body can be tilted even when the moment load acting on the spindle is relatively small.

### BRIEF DESCRIPTION OF DRAWINGS

FIG. 1 is a sectional view of a tilting mechanism according to a first embodiment.
FIG. 2 is a sectional view of the tilting mechanism according to the first embodiment in use.
FIG. 3 is a sectional view of a tilting mechanism according to a second embodiment.
FIG. 4 is a cross-sectional view taken along line IV-IV in FIG. 3.
FIG. 5 is a sectional view of a tilting mechanism according to a third embodiment.
FIG. 6 is a sectional view of a deburring tool according to a modification of the third embodiment.

### DETAILED DESCRIPTION

### First Embodiment

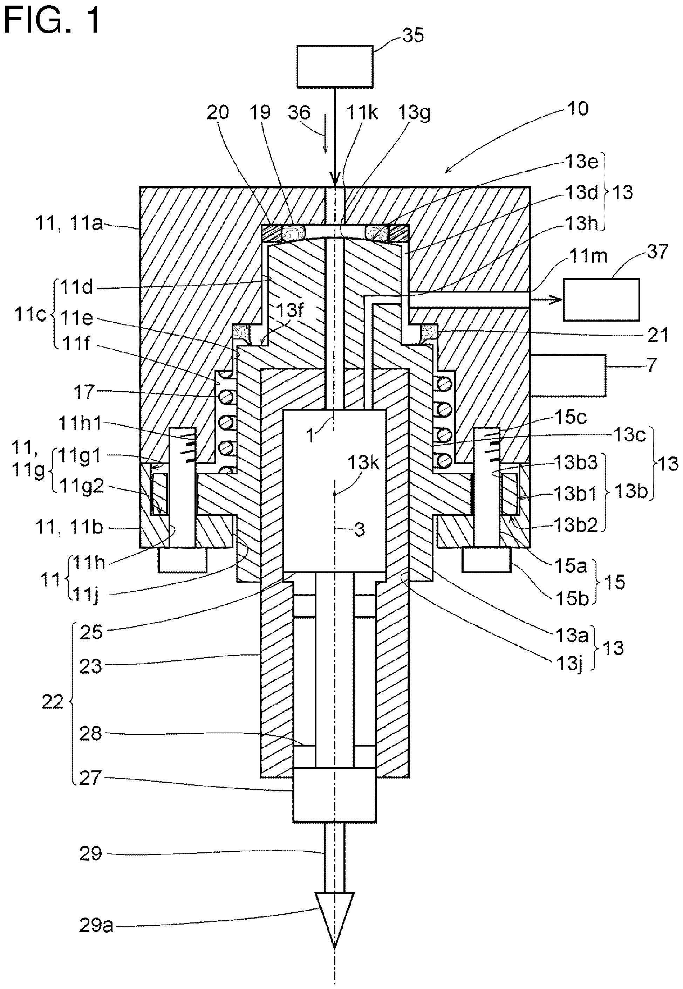

As shown in FIG. 1, a tilting mechanism 10 according to the present embodiment includes a reference axis 1, a housing 11, a body 13, an anti-rotation pin 15, a spring (elastic body) 17, a seal ring (first seal) 19, a backup ring 20, a lip seal (second seal) 21, and a spindle body (attachment) 22. The tilting mechanism 10 may include a tool axis (attachment axis) 3, an air source (working fluid source) 35, a silencer (ejector) 37, and a moving device 7. FIG. 1 is a sectional view of the tilting mechanism 10 taken along a plane passing through the reference axis 1. The tilting mechanism 10 is a deburring tool. Hereinafter, the lower direction in FIG. 1 is referred to as a distal end direction, and the upper direction in FIG. 1 is referred to as a basal end direction.

The tilting mechanism 10 is installed to the moving device 7. The moving device 7 is, for example, a machining tool or a robot. The robot is, for example, an orthogonal axis robot, a vertical articulated robot, a horizontal articulated robot, or a parallel link robot.

The tilting mechanism 10 may be connected to the air source 35 or the silencer 37. The air source 35 supplies compressed air (working fluid) 36 to the tilting mechanism 10. The silencer 37 discharges the compressed air 36.

The housing 11 has a columnar shape extending along the reference axis 1. The housing 11 has, for example, a cylindrical shape or a quadrangular prism shape centered on the reference axis 1. The housing 11 includes a body chamber 11c, a flange chamber 11g, and a body hole 11j in this order from the basal end. The body chamber 11c, the flange chamber 11g, and the body hole 11j are connected to each other. The housing 11 includes a pin hole 11h, a housing supply port 11k, and a housing discharge port 11m.

The housing 11 is divided into a case 11a and a cover 11b. The case 11a and the cover 11b are divided, for example, at the basal end of the flange chamber 11g.

The body chamber 11c has a stepped cylindrical shape centered on the reference axis 1. The body chamber 11c includes a small diameter portion 11d, a large diameter portion 11e, and a spring chamber (elastic member chamber) 11f. The small diameter portion 11d, which is a right cylinder, is located at a basal end of the body chamber 11c. The large diameter portion 11e is located in a middle portion of the body chamber 11c to be connected to the small diameter portion 11d. The large diameter portion 11e is a right cylinder having a diameter larger than the small diameter portion 11d. The spring chamber 11f is located at a distal end of the body chamber 11c. The spring chamber 11f is a right cylinder having a larger diameter than the large diameter portion 11e.

The flange chamber 11g is disc-shaped having a larger diameter than the spring chamber 11f. The flange chamber 11g includes a receiving surface 11g1 and an abutment surface 11g2. The receiving surface 11g1, which is an inner side surface of the flange chamber 11g, is a right cylindrical surface centered on the reference axis 1. The abutment surface 11g2 is a distal end surface of the flange chamber 11g. Preferably, the abutment surface 11g2 is a plane perpendicular to the reference axis 1.

The body hole 11j, which has a smaller diameter than the flange chamber 11g, opens into the distal end of the housing 11.

The pin hole 11h extends parallel to the reference axis 1. The pin hole 11h extends from the distal end of the housing 11 to the flange chamber 11g. The pin hole 11h may pass through the cover 11b to the case 11a. For example, the pin hole 11h is a bottomed hole located through the basal end surface of the flange chamber 11g. The pin hole 11h may have an internal thread 11h1. The internal thread 11h1 may be located at the basal end of the flange chamber 11g. A plurality of the pin holes 11h are evenly arranged on the circumference.

The housing supply port 11k is located at a basal end of the housing 11. The housing supply port 11k extends along the reference axis 1 to be connected to the body chamber 11c. For example, the housing supply port 11k is connected to the center of the bottom of the small diameter portion 11d. The housing supply port 11k is connected to the air source 35.

The housing discharge port 11m, which is located at an outer peripheral portion of the housing 11, is connected to the body chamber 11c. For example, the housing discharge port 11m is connected to a cylindrical surface that is a side surface of the small diameter portion 11d. The housing discharge port 11m is connected to the silencer 37.

The body 13 has a right cylindrical shape centered on the tool axis (attachment axis) 3. The body 13 is swingably disposed in the body chamber 11c. The body 13 includes a distal end portion 13a, a flange 13b, a central portion 13c, a stepped portion 13f, a basal end portion 13d, and a second spherical surface 13e in this order from the distal end. The distal end portion 13a, the flange 13b, the central portion 13c, the stepped portion 13f, the basal end portion 13d, and the second spherical surface 13e are connected to each other. The body 13 may include one or more body supply port 13g, one or more body discharge port 13h, and an attachment chamber 13j.

The distal end portion 13a, which is cylindrical shape, is connected to the distal end of the flange 13b. The distal end portion 13a may protrude from the housing 11.

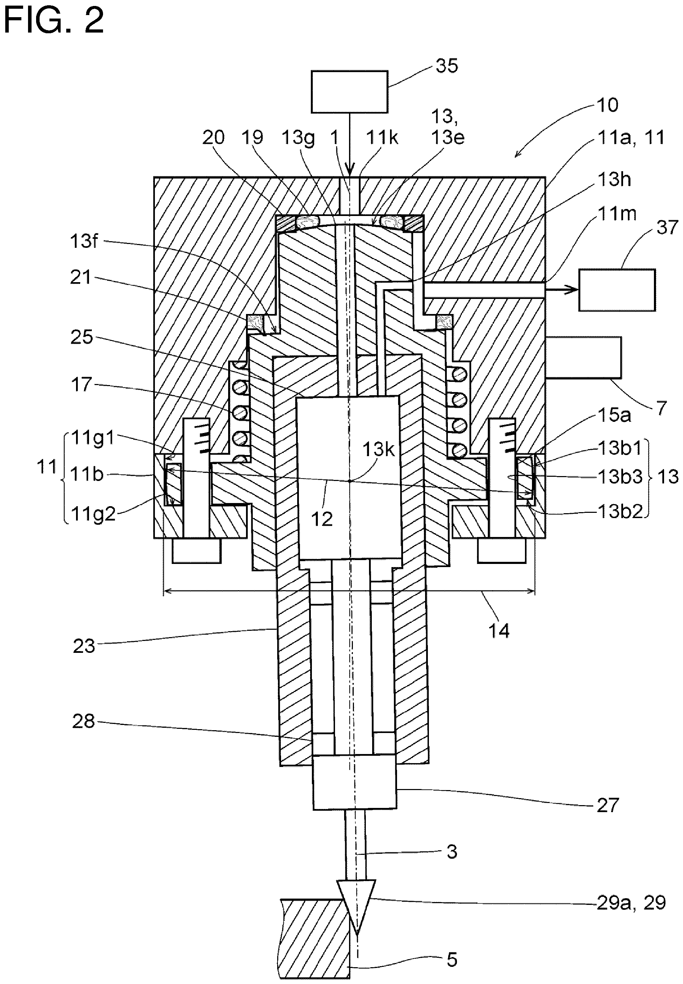

The flange 13b includes a first spherical surface 13b1, a contact surface 13b2, and a anti-rotation hole (receiving portion) 13b3. The first spherical surface 13b1 is a spherical surface having a center 13k. The center 13k is located on the tool axis 3. The first spherical surface 13b1 abuts the receiving surface 11g1. The diameter 12 (see FIG. 2) of the first spherical surface 13b1 is substantially the same as or slightly smaller than the diameter 14 (see FIG. 2) of the receiving surface 11g1. Specifically, the diameter 12 is between 95% and 100% of the diameter 14, preferably between 97% and 100%, for example between 97% and 99%. The center 13k is located at a central portion in a thickness direction of the flange 13b. The center 13k is located substantially on the reference axis 1. The contact surface 13b2 is located at a distal end of the flange 13b. The cross-section of the anti-rotation hole 13b3 is circular or rectangular.

The central portion 13c and the basal end portion 13d are right cylinders centered on the tool axis 3. The basal end portion 13d has a diameter smaller than the central portion 13c. The central portion 13c and the basal end portion 13d are connected to each other by the stepped portion 13f. The stepped portion 13f is, for example, a flat surface. The stepped portion 13f may be a conical surface or a spherical surface. The central portion 13c is disposed in the large diameter portion 11e or the spring chamber 11f. The basal end portion 13d is disposed in the small diameter portion 11d.

The second spherical surface 13e is located at the basal end of the body 13. The second spherical surface 13e is a spherical surface having the center 13k. That is, the first spherical surface 13b1 and the second spherical surface 13e are concentric.

The attachment chamber 13j is located at a distal end portion of the body 13. The attachment chamber 13j is, for example, a right cylindrical shape.

The body supply port 13g is located at a basal end portion of the second spherical surface 13e. The body supply port 13g extends along the tool axis 3. The body supply port 13g is connected to the attachment chamber 13j and the housing supply port 11k.

The body discharge port 13h is located on a cylindrical surface of the basal end portion 13d. For example, a plurality of the body discharge ports 13h are evenly arranged on the circumference. The body discharge port 13h is connected to the attachment chamber 13j and the housing discharge port 11m.

The body 13 is urged by a spring 17. When the body 13 is not tilted from the reference axis 1, the contact surface 13b2 abuts against the abutment surface 11g2.

The anti-rotation pin 15 includes a head 15b, a shaft portion 15a, and a fastening portion 15c in this order from the distal end. The anti-rotation pin 15 has a bolt shape. The anti-rotation pin 15 fixes the cover 11b to the case 11a. The head 15b abuts against the cover 11b. The fastening portion 15c, which has an external thread, is fastened to the internal thread 11h1. The shaft portion 15a abuts against the anti-rotation hole 13b3.

The spring 17 is a compression coil spring. The spring 17 is disposed between the spring chamber 11f and the flange 13b. The spring 17 may be guided by an inner wall surface of the spring chamber 11f or the central portion 13c. The spring 17 urges the body 13 toward the distal end.

The elastic body may be, for example, a rubber or a three-dimensional spring instead of the spring 17. The spring 17 may be disposed between the small diameter portion 11d and the stepped portion 13f. A plurality of springs 17 may be disposed between the flange chamber 11g and the flange 13b.

The seal ring 19 has, for example, a circular or X-shaped cross section. The seal ring 19 is, for example, a ring of synthetic rubber or natural rubber. The seal ring 19 is disposed on the basal end surface of the small diameter portion 11d. The seal ring 19 seals between the small diameter portion 11d and the second spherical surface 13e. The compressed air 36 passes through the inside of the seal ring 19 to be supplied from the housing supply port 11k to the body supply port 13g. The seal ring 19 separates the housing supply port 11k from the housing discharge port 11m.

The backup ring 20 has, for example, a rectangular cross section. The backup ring 20 is disposed radially outward of the seal ring 19. The backup ring 20 holds the seal ring 19. The backup ring 20 is, for example, a resin ring.

The lip seal 21 is disposed at the basal end portion of the large diameter portion 11e. The lip seal 21 includes a lip that abuts against the stepped portion 13f. The lip seal 21 seals a gap between the body chamber 11c and the body 13.

The spindle body 22 includes a tool casing 23, a spindle motor 25, a spindle 27, and a spindle bearing 28. The spindle body 22 is attached to the body 13. The tool casing 23, which has a hollow cylindrical shape, is disposed in the attachment chamber 13j.

The spindle motor 25 is disposed in the tool casing 23. The spindle motor 25 is a fluid motor, preferably an air motor. The spindle motor 25 is connected to the body supply port 13g and the body discharge port 13h. The spindle motor 25 is rotated by the compressed air 36 supplied from the body discharge port 13h, and discharges the compressed air 36 through the body discharge port 13h.

The spindle 27 is supported by the tool casing 23 with the spindle bearing 28. The spindle 27 is connected to the spindle motor 25. The spindle 27 is rotated by the spindle motor 25. A tip tool 29 is attached to the spindle 27. The tip tool 29 has a cutting edge 29a.

The abutment surface 11g2 may be a right conical surface centered on the reference axis 1. At this time, the contact surface 13b2 may be a right conical surface centered on the tool axis 3. At this time, the abutment surface 11g2 and the contact surface 13b2 have the same apex angle.

When the spindle body 22 is not a fluidic device, the housing supply port 11k, the body supply port 13g, the seal ring 19, the backup ring 20, the housing discharge port 11m, the body discharge port 13h, the lip seal 21, and the second spherical surface 13e may be omitted.

The tilting mechanism 10 in use will be described with reference to FIG. 2. FIG. 2 shows a sectional view of the tilting mechanism 10 in a state in which the tip tool 29 is in contact with a workpiece 5 and the spindle body 22 is tilted.

First, the air source 35 supplies the compressed air 36 to the spindle motor 25 through the housing supply port 11k, the body chamber 11c, and the body supply port 13g. The spindle motor 25 thus rotates the spindle 27 and the tip tool 29. The compressed air 36 is discharged from the spindle motor 25 through the body discharge port 13h, the body chamber 11c, the housing discharge port 11m, and the silencer 37. The anti-rotation hole 13b3 abuts against the shaft portion 15a of the anti-rotation pin 15, which prevents the body 13 from rotating. The moving device 7 then brings the cutting edge 29a into contact with the side surface of the workpiece 5. The body 13 receives a moment load from the workpiece 5. At this time, the contact surface 13b2 is separated from the abutment surface 11g2 against the elastic force of the spring 17 and the pressure of the compressed air 36. The first spherical surface 13b1 contacts the receiving surface 11g1. The body 13 then tilts about the center 13k. The second spherical surface 13e contacts the seal ring 19 and pivots with the seal ring 19 collapsed.

According to the tilting mechanism 10 of the present embodiment, the body 13 is urged toward the distal end by the elastic force of the spring 17 and the pressure of the compressed air 36. When a moment load is not applied to the spindle body 22, the contact surface 13b2 abuts against the abutment surface 11g2. The first spherical surface 13b1 is guided to the receiving surface 11g1. The center 13k of the first spherical surface 13b1 is thus located very close to the reference axis 1. Thereby, the tool axis 3 and the reference axis 1 are substantially identical. Here, substantially the same means that the tool axis 3 and the reference axis 1 are parallel to each other, and the deviation between the tool axis 3 and the reference axis 1 is sufficiently smaller than the cut amount of the cutting edge 29a with respect to the workpiece 5. For example, the deviation of the tool axis 3 from the reference axis 1 is within 0.5 mm, preferably within 0.2 mm.

As the first spherical surface 13b1 abuts against the receiving surface 11g1, the body 13 can be smoothly tilted about the center 13k of the first spherical surface 13b1.

The second spherical surface 13e contacts the seal ring 19. The second spherical surface 13e is disposed to collapse the seal ring 19. The second spherical surface 13e has the same center 13k as the first spherical surface 13b1, and the body 13 tilts about the center 13k. Thus, even when the body 13 is tilted, the crushing margin of the seal ring 19 is kept substantially uniform. The seal ring 19 thus evenly urges the body 13 toward the distal end on the circumference.

The seal ring 19 separates the housing supply port 11k and the body supply port 13g from the housing discharge port 11m and the body discharge port 13h. The pressure of the compressed air 36 supplied to the spindle body 22 is thus maintained.

### Second Embodiment

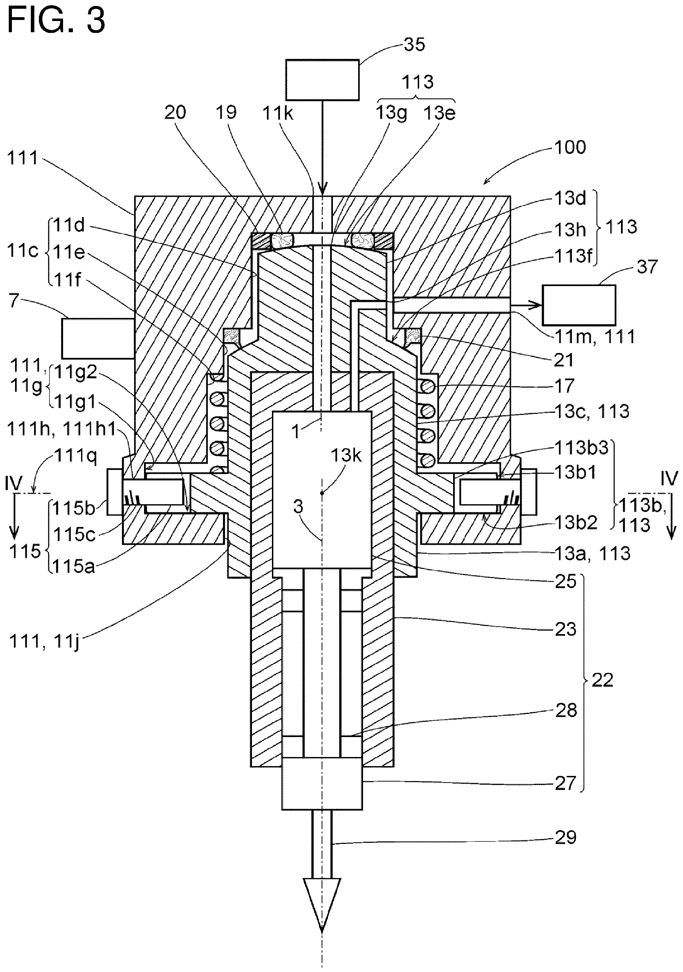

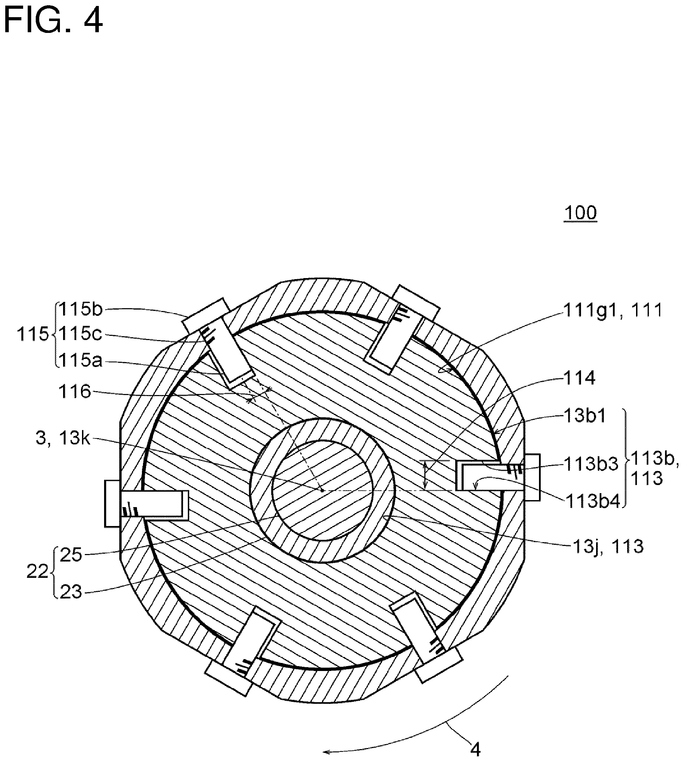

As shown in FIGs. 3 and 4, the tilting mechanism 100 according to the present embodiment includes a housing 111, a body 113, an anti-rotation pin 115, a spindle body 22, a spring 17, a seal ring 19, a backup ring 20, and a lip seal 21.

The housing 111 includes a body chamber 11c, a flange chamber 11g, a body hole 11j, a pin hole 111h, a housing supply port 11k, and a housing discharge port 11m. The pin hole 111h is arranged perpendicular to the reference axis 1 and on a pin installation plane 111q. The pin hole 111h has an internal thread 111h1.

The anti-rotation pin 115 has a bolt shape. The anti-rotation pin 115 includes a head portion 115b, a fastening portion 115c, and a shaft portion 115a in this order from the radially outside. The shaft portion 115a is a right cylinder. The head portion 115b abuts against the housing 111. The fastening portion 115c, which is an external thread, is fastened to the internal thread 111h1. As shown in FIG. 4, the pin hole 111h and the anti-rotation pin 115 extend radially. The center of the anti-rotation pin 115 is offset on the pin installation plane 111q in a direction opposite to the rotational direction 4 of the spindle 27 by a radius 116 of the shaft portion 115a from an abutment surface 113b4 to be described later.

The shaft portion 115a may have a bulging portion (not shown). The bulging portion is, for example, spherical.

As shown in FIG. 3, the body 113 includes a distal end portion 13a, a flange 113b, a central portion 13c, a basal end portion 13d, a second spherical surface 13e, a stepped portion 113f, a body supply port 13g, and a body discharge port 13h.

The flange 113b includes a first spherical surface 13b1, a contact surface 13b2, and an anti-rotation groove (receiving portion) 113b3. In a normal state in which the contact surface 13b2 abuts against the abutment surface 11g2, the center 13k is located on the pin installation plane 111q. The anti-rotation groove 113b3 penetrates the flange 113b in a direction parallel to the tool axis 3 (up-down direction in FIG. 3). As shown in FIG. 4, the anti-rotation groove 113b3 has a rectangular cross-section when viewed in the direction of the tool axis 3. The anti-rotation groove 113b3 has an abutment surface 113b4. A width 114 of the anti-rotation groove 113b3 is slightly greater than twice the radius 116 of the shaft portion 115a. The anti-rotation groove 113b3 extends radially. The anti-rotation groove 113b3 is offset in the opposite direction of the rotational direction 4 from the abutment surface 113b4 on the pin installation plane 111q. The abutment surface 113b4 is a surface of the anti-rotation groove 113b3 in the rotational direction 4. The abutment surface 113b4 is a plane passing through the tool axis 3. The abutment surface 113b4 abuts against the shaft portion 115a.

The stepped portion 113f is a spherical surface having the center 13k.

The tilting mechanism 100 according to the present embodiment includes the anti-rotation pin 115 extending in the radial direction. It is thus easy to reduce the size of the tilting mechanism 100. Further, the tilt width is easier to increase than the tilting mechanism 10 of the first embodiment. When the body 113 is tilted, the anti-rotation groove 113b3 slides at the contacting portion with the anti-rotation pin 115. This promotes the body 113 to tilt smoothly.

The tilting mechanism 100 according to the present embodiment is a spherical surface in which the stepped portion 113f has the center 13k. Thus, even when the body 113 is tilted, there is little change in the tilting of the lip of the lip seal 21. This causes the body 113 to tilt smoothly. Further, the life of the lip seal 21 is extended.

### Third Embodiment

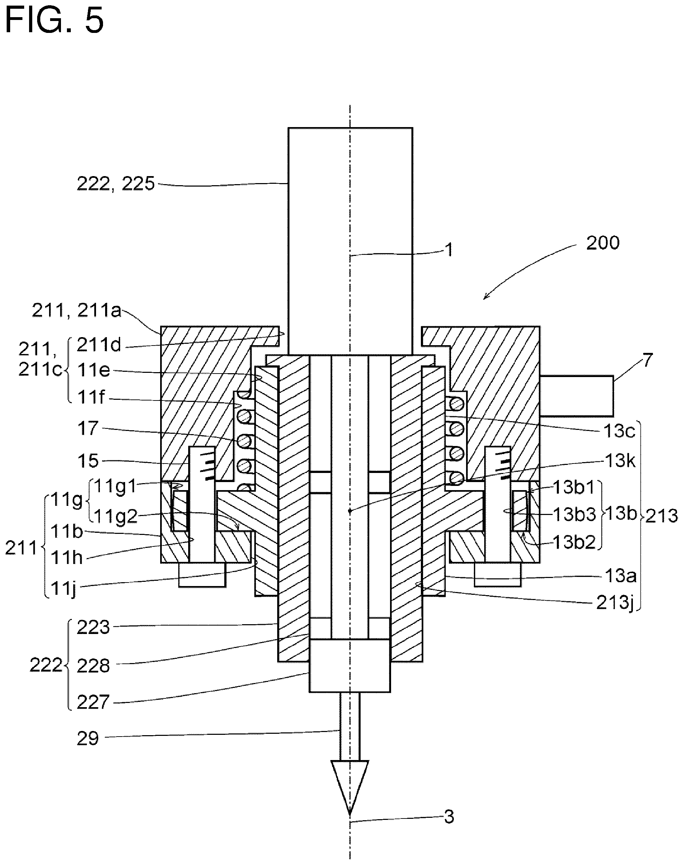

As shown in FIG. 5, the tilting mechanism 200 according to the present embodiment includes a housing 211, a body 213, a spring 17, an anti-rotation pin 15, and a spindle body (attachment) 222.

The housing 211 includes a case 211a and a cover 11b. The case 211a includes a body chamber 211c. The body chamber 211c includes a small diameter portion 211d, a large diameter portion 11e, and a spring chamber 11f. The small diameter portion 211d penetrates the basal end of the case 211a. The case 211a is formed by cutting the basal end portion of the case 11a of the first embodiment to the distal end of the small diameter portion 11d. The case 211a does not have a flow path for compressed air 36.

The body 213 includes a central portion 13c, a flange 13b, a distal end portion 13a, and an attachment chamber 213j. The attachment chamber 213j extends along the tool axis 3 to pass through the body 213. The body 213 is shaped such that the basal end portion 13d of the body 13 of the first embodiment is cut and penetrates the attachment chamber. The body 213 does not have a flow path for compressed air 36.

The spindle body 222 includes a tool casing 223, a spindle bearing 228, a spindle 227, and a spindle motor 225. The tool casing 223 passes through the attachment chamber 213j. The spindle motor 225 is disposed at a basal end portion of the tool casing 223. The spindle motor 225 is, for example, an electric motor. The spindle 227 is supported by the tool casing 223 with the spindle bearing 228 to be connected to the spindle motor 225. The tip tool 29 is attached to the spindle 227.

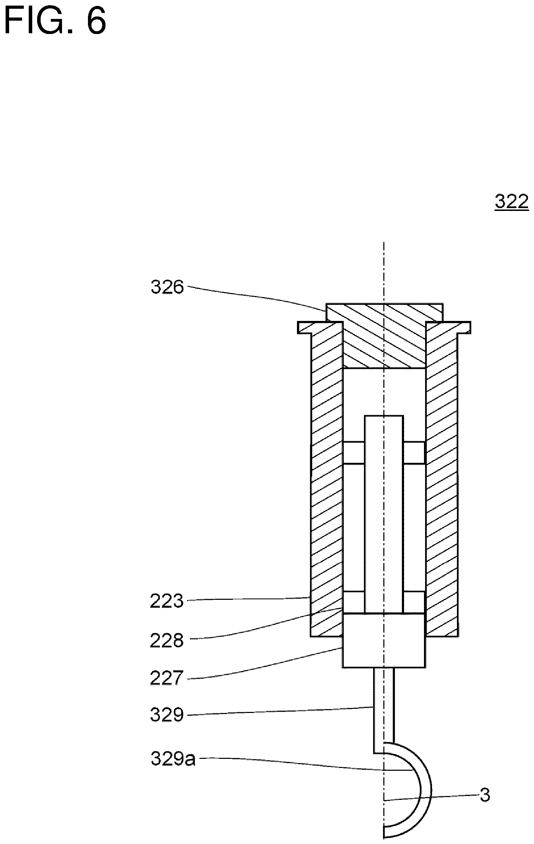

The tilting mechanism 200 according to the present embodiment can be configured to be compact. The present invention thus can be suitably applied to a scraper-type deburring tool (attachment) 322 (see FIG. 6).

As shown in FIG. 6, the deburring tool 322 includes a tool casing 223, a spindle bearing 228, a spindle 227, a cover 326, and a tip tool 329. The cover 326 covers the basal end of the tool casing 223. The tip tool 329 is attached to the spindle 227. The tip tool 329 includes a scraper 329a. The scraper 329a, which has a semicircular arc shape, has scraper blades inside the circular arc.

When the scraper-type deburring tool 322 is attached to the tilting mechanism 200, the tilting mechanism 200 is configured to be compact and inexpensive as the tilting mechanism 200 does not include a driver.

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

1 Reference axis
10, 100, 200 Tilting mechanism
11, 111, 211 Housing
11c, 211c Body chamber
11g1 Receiving surface
11g2 Abutment surface
13, 113, 213 Body
13b1 First spherical surface
13b2 Contact surface
17 Spring (Elastic body)
15, 115 Anti-rotation pin (Anti-rotation member)

## Claims

1. A tilting mechanism (10, 100, 200), comprising:
a housing (11, 111, 211) including
a body chamber (11c, 211c) extending along a reference axis (1),
a receiving surface (11g1) located at a distal end portion of the body chamber (11c), and
an abutment surface (11g2),
a body (13, 113, 213) disposed inside the body chamber (11c) in a tiltable manner with respect to the reference axis (1), the body (13, 113, 213) including
a first spherical surface (13b1) configured to come in contact with the receiving surface (11g1), and
a contact surface (13b2) configured to come in contact with the abutment surface (11g2),
an elastic member (17) disposed in the body chamber (11c), the elastic member (17) configured to urge the body (13, 113, 213) toward a distal end; and
an anti-rotation member (15, 115) disposed in the housing (11, 111, 211) to prevent rotation of the body (13, 113, 213).

2. The tilting mechanism (10, 100, 200) according to claim 1, wherein
the abutment surface (11g2) is located in a distal end portion of the body chamber (11c), and
the contact surface (13b2) is located on a distal end portion of the body (13).

3. The tilting mechanism (10, 100, 200) according to claim 1 or 2, wherein
the receiving surface (11g1) is a right cylindrical surface.

4. The tilting mechanism (10, 100, 200) according to any one of claims 1 to 3, wherein
the abutment surface (11g2) is a plane perpendicular to the reference axis (1).

5. The tilting mechanism (10, 100, 200) according to any one of claims 1 to 4, wherein
the body chamber (11c) includes an elastic member chamber (11f), and
the elastic member (17) is disposed in the elastic member chamber (11f) to be guided by the elastic member chamber (11f) or the body (13).

6. The tilting mechanism (10, 100, 200) according to any one of claims 1 to 5, wherein
the body (13) includes a flange (13b, 113b) including
an outer circumferential surface being the first spherical surface (13b1), and
the contact surface (13b2) located at the distal end.

7. The tilting mechanism (10, 100, 200) according to any one of claims 1 to 6, further comprising:
an attachment (22, 222) attached to the body (13, 113), the attachment (22, 222) including
a spindle (27, 227) to which a tip tool (29) is attachable, the spindle (27, 227) rotatably supported by the body (13, 113),
a spindle motor (25, 225) connected to the spindle (27, 227), the spindle motor (25, 225) disposed in the body (13, 113).

8. The tilting mechanism (10, 100) according to any one of claims 1 to 7, wherein
the housing (11, 111) includes a housing supply port (11k) connected to a basal end of the body chamber (11c) to supply working fluid (36) to the body chamber (11c),
the body (13) includes a body supply port (13g) located at a basal end of the body (13) to be connected to the housing supply port (11k), and
the tilting mechanism (10, 100) further comprising:
a first seal (19) disposed in the body chamber (11c), the first seal (19) connecting the housing supply port (11k) and the body supply port (13g) to seal a gap between the body chamber (11c) and the body (13).

9. The tilting mechanism (10, 100) according to claim 8, wherein
the body (13, 113) includes a second spherical surface (13e) coming in contact with the first seal (19) at a basal end, the second spherical surface (13e) being concentric with the first spherical surface (13b1).

10. The tilting mechanism (10, 100) according to any one of claims 1 to 9, wherein
the housing (11) includes a housing discharge port (11m) connected to the body chamber (11c), the housing discharge port (11m) separated from the housing supply port (11k) and the body supply port (13g) by the first seal (19), and
the body (13) includes a body discharge port (13h) connected to the attachment (22) and the body chamber (11c),
the tilting mechanism (10, 100) further comprising:
a second seal (21) disposed toward distal end from the housing discharge port (11m) and the body discharge port (13h) to seal a gap between the housing (11) and the body (13).

11. The tilting mechanism (10, 100, 200) according to any one of claims 1 to 10, wherein
the body (13) includes a receiving portion (13b3, 113b3) located in the flange (13b), and
the anti-rotation member (15, 115) is disposed in the housing (11) to be inserted in the receiving portion (13b3, 113b3).

12. The tilting mechanism (10, 100) according to any one of claims 1 to 10, wherein
the spindle motor (25) is connected to the body supply port (13g) to be rotated by the working fluid (36).

13. The tilting mechanism (10, 100) according to claim 10, wherein
the spindle motor (25) is connected to the body discharge port (13h).
